# EUROPEAN PATENT SPECIFICATION

(11) **EP 1 409 342 B1**
(45) Date of publication and mention of the grant of the patent: **08.12.2004**
(21) Application number: 02751306.8
(22) Date of filing: 11.07.2002
(51) Int. Cl.: B64C 3/26, F16B 25/00

(54) **A METHOD OF SECURING COMPOSITE ELEMENTS TOGETHER AND AIRCRAFT WING**
VERFAHREN ZUM VERBINDEN VON VERBUNDKÖRPERN UND FLUGZEUGFLÜGEL
PROCEDE D'ASSEMBLAGE D'ELEMENTS COMPOSITES ET AILE D'AVION

(30) Priority: 21.07.2001 GB 0117805
(43) Date of publication of application: 21.04.2004
(73) Proprietor: BAE Systems PLC, London SW1Y 5AD (GB)
(72) Inventor: GAITONDE, John Martn Airbus UK Limited, Filton Bristol (GB)
(74) Representative: Mukherjee, Aniruddha
(86) International application number: PCT/GB2002/003187
(87) International publication number: WO 2003/008265

(56) References cited:
- US-A- 3 083 609
- US-A- 4 425 080
- US-A- 4 557 100
- US-A- 4 793 113
- US-A- 5 398 831

## Description

The present invention relates to a method of securing composite elements together. The method is particularly suitable for use during the manufacture and/or repair of aircraft.

Traditionally, the airframe of aircraft has tended to be constructed using metal panels secured to a metal frame. These components are then attached together using techniques such as riveting or bolting. The use of screws is particularly avoided as they are known to potentially lead to the formation of fatigue cracks in a structure.

With continuing advances in materials science, composite materials have become available which can be used for the formation of structural components of an aircraft. Composite components are produced by bonding multiple layers of fibrous mat together in order to build up a desired shape and/or structural element. The fibres in any given layer typically predominately extend along one direction. Consequently, the "directions" of adjacent layers may be staggered in order to tailor the structural properties of the composite material to those required by the designer.

Typically the formation of complex shapes has required the creation of a suitably shaped former over which the layers of fibrous material are placed, and impregnated with a resin, prior to curing. The formation of complex shapes can be labour intensive. Thus, although the components having a complex shape frequently meet the design criteria from an engineering point of view, the cost of production may make their use prohibitively expensive.

According to a first aspect of the present invention, there is provided a method of attaching first and second elements together during the manufacture or repair of an aircraft, wherein the elements are formed of composite material, the method comprising presenting a self-tapping screw to a surface of the first element and rotating the screw such that it passes through the first element and into the body of the second element so as to attach the first and second elements to one another.

It is thus possible to attach separate composite elements together using self-tapping screws. The use of screw fasteners in this way is against the commonly accepted technical practice in the aircraft industry since, as noted hereinabove, the use of screw fasteners is generally perceived to potentially lead to the formation of fatigue cracks within metal components. However, the applicant has realised that screw fasteners do not cause a fatigue problem in composite components. Furthermore, in preliminary tests the applicant has discovered that screw fasteners give surprisingly good shear and pull out performance when used with composite materials. This is thought to be because the screw tends to compress and trap portions of the fibrous layers between adjacent sections of the screw thread.

Preferably the screw is a self-tapping and self-drilling screw. A self-drilling screw effectively has a pilot drill integrally formed with the shaft of the screw. Thus the use of separate pilot drills to preform a pilot hole is avoided. The self-drilling and self-tapping screw can be presented to a composite element, and then screwed into the element, thereby cutting its own pilot hole.

Advantageously countersunk screws may be used such that they lie flush with the surface of the composite component through which they pass. Such screws may be used for attaching panels to supporting struts or spars in, for example, the formation of a wing. Indeed, suitably shaped and profiled panels may be attached together to form a box wing. The use of countersunk screws would be beneficial in areas where it is important to maintain a smooth aerodynamic surface. However, this requires a prior countersinking operation to be performed on the panel.

Where it is desired to join panels together, suitable linking elements, for example elongated bars having an "L" shaped cross-section may be constructed out of composite material these effectively form linking and strengthening brackets.

According to a second aspect of the present invention, there is provided an aircraft wing, said wing having a plurality of elements therein formed of composite material, wherein elements of composite material are fastened together via self-tapping screws.

The present invention will further be described, by way of example, with reference to the accompanying drawings, in which:
Figure 1 is a simplified section through an aircraft wing having a box construction;
Figure 2 illustrates how a wing panel is attached to a supporting rib; and
Figure 3 schematically illustrates how two panels may be attached together to provide a section of increased structural rigidity.

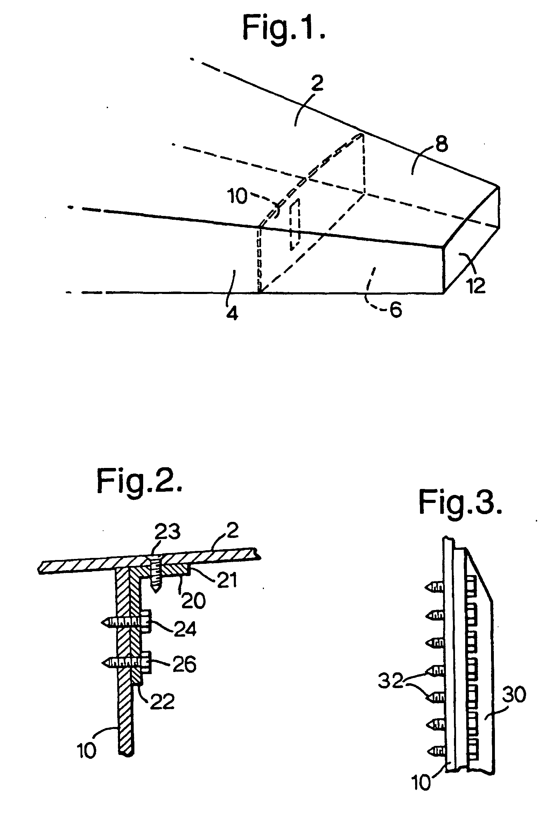

Figure 1 schematically illustrates a wing formed according to a box design. In this design, an upper panel 2, a forward panel 4, a lower panel 6, and a rear panel 8 co-operate to define a central box which serves to impart the basic shape to the wing, to give structural rigidity to the wing, and which also may serve to define walls of fuel tanks provided in the wing. In order to hold the walls 2, 4, 6 and 8 in position with respect to one another, ribs are periodically positioned throughout the length of the wing. In the example shown in Figure 1, only two ribs 10 and 12 are shown for the sake of simplicity. These elements 10 and 12 effectively subdivide the wing into a series of contiguous boxes.

It is necessary to join the panels 2, 4, 6 and 8 to each other at their edges and also to the ribs 10 and 12. An effective way of doing this is schematically illustrated in Figure 2. As shown in Figure 2, the point of attachment between the upper panel 2 and the rib 10 is provided by an intermediate element 20 which defines a first flange 21 which, in use bears against the panel 2, attached to second flange 22, which in use bears against the rib 10. In order to connect the intermediate element 20 to the panel 2 and rib 10, self-drilling self-tapping screws are used. A first of these screws, 23, is countersunk in order that the head of the screw lies flush with the upper surface of the upper panel 2 as shown in Figure 2. However, where it is not important for the screw head to be flush non-countersunk screws, such as screws having a bolt like head, may be used.

Self-drilling self-tapping screws are commercially available and are known to the person skilled in the art. Thus they need not be described more fully here.

The ribs 10 and 12 do not need to be of uniform thickness. It may, for example, be desirable for the ribs 10 and 12 to be effectively thicker near their edges and possibly have one or two regions of increased thickness at intermediate portions along the rib. Rather than form complex shapes, the rib profile can be built up by attaching strengthening elements 30 to the rib 10 using self-tapping screws 32 as shown in Figure 3. This allows components having complex load bearing profiles to be constructed from easily formable planar elements.

## Claims

1. A method of attaching first and second elements together during manufacture or repair of an aircraft, wherein the elements are formed of composite material, the method comprising presenting a self-tapping screw to a surface of the first element, and rotating the screw such that it passes through the first element and into the body of the second element so as to attach the first and second elements to one another.

2. A method as claimed in claim 1, in which the self-tapping screw is a self-drilling screw.

3. A method as claimed in claim 1 or 2, in which the self-tapping screw extends completely through the second element.

4. A method as claimed in any one of the preceding claims in which the first and second elements are formed of laminated elements, and the longitudinal axis of the self-tapping screw is perpendicular to the plane of the laminate.

5. A method as claimed in any one of the preceding claims, in which one of the first and second elements is a panel element and the other of the first and second elements is a strut.

6. A method as claimed in claim 5, in which the panel is part of the skin of an aircraft wing.

7. An aircraft wing, said wing having a plurality of elements therein formed of composite material, wherein elements of composite material are fastened to one another via self-tapping screws.

## Patentansprüche

1. Verfahren zur gegenseitigen Verbindung eines ersten Bauteils mit einem zweiten Bauteil während der Herstellung oder Reparatur eines Flugzeugs, bei dem die Bauteile aus Verbundmaterial bestehen und durch das Verfahren eine selbstschneidende Schraube einer Oberfläche eines ersten Bauteils zugeführt und die Schraube derart gedreht wird, dass sie durch den ersten Bauteil hindurch in den Körper des zweiten Bauteils derart eingedreht wird, dass der erste Bauteil mit dem zweiten Bauteil fest verbunden wird.

2. Verfahren nach Anspruch 1, bei welchem die selbstschneidende Schraube eine selbstbohrende Schraube ist.

3. Verfahren nach den Ansprüchen 1 oder 2, bei welchem die selbstschneidende Schraube sich vollständig durch den ersten Bauteil hindurch erstreckt.

4. Verfahren nach einem der vorhergehenden Ansprüche, bei welchem der erste und der zweite Bauteil aus laminierten Elementen bestehen und die Längsachse der selbstschneidenden Schraube senkrecht zur Ebene des Laminats verläuft.

5. Verfahren nach einem der vorhergehenden Ansprüche, bei welchem eines von erstem und zweitem Bauteil ein Paneelenelement und das andere von erstem und zweitem Bauteil eine Strebe ist.

6. Verfahren nach Anspruch 5, bei welchem das Paneel ein Teil der Außenhaut eines Flugzeugtragflügels ist.

7. Flugzeugtragflügel, der mehrere Bauteile aus Verbundmaterial aufweist, wobei die Bauteile aus Verbundmaterial miteinander über selbstschneidende Schrauben verbunden sind.

## Revendications

1. Une méthode pour attacher des premier et deuxième éléments ensemble durant la fabrication ou la réparation d'un aéronef, dans laquelle les éléments sont formés en matériau composite, la méthode comportant de présenter une vis autotaraudeuse à une surface du premier élément, et de faire tourner la vis de telle sorte qu'elle passe au travers du premier élément et dans le corps du deuxième élément de façon à attacher les premier et deuxième éléments l'un à l'autre.

2. Une méthode telle que revendiquée dans la revendication 1, dans laquelle la vis autotaraudeuse est une vis autoperceuse.

3. Une méthode telle que revendiquée dans la revendication 1 ou la revendication 2, dans laquelle la vis autotaraudeuse s'étend complètement au travers du deuxième élément.

4. Une méthode telle que revendiquée dans n'importe laquelle des revendications précédentes, dans laquelle les premier et deuxième éléments sont formés en éléments stratifiés, et l'axe longitudinal de la vis autotaraudeuse est perpendiculaire au plan du stratifié.

5. Une méthode telle que revendiquée dans n'importe laquelle des revendications précédentes, dans laquelle un élément d'entre les premier et deuxième éléments est un élément formant panneau et l'autre élément d'entre les premier et deuxième éléments est un montant.

6. Une méthode telle que revendiquée dans la revendication 5, dans laquelle le panneau fait partie du revêtement d'une aile d'aéronef.

7. Une aile d'aéronef, ladite aile ayant une pluralité d'éléments formés en matériau composite dans celle-ci, dans laquelle des éléments en matériau composite sont assujettis les uns aux autres par le biais de vis autotaraudeuses.
